# EUROPEAN PATENT APPLICATION

(11) **EP 4 814 857 A1**
(43) Date of publication of application: **30.09.2026**
(21) Application number: 26164725.9
(22) Date of filing: 13.03.2026
(51) Int. Cl.: G06T 5/00

(54) **IMAGE PROCESSING METHOD AND IMAGE PROCESSING SYSTEM USED FOR GENERATING AN IMPROVED IMAGE**

(30) Priority: 28.03.2025 US 202563779299 P; 15.10.2025 US 202519358454
(71) Applicant: MediaTek Inc., Hsinchu City 30078 (TW)
(72) Inventor: XU, Yu-Syuan, 30078 Hsinchu City (TW); LIN, Yu-Cheng, 30078 Hsinchu City (TW); CHEN, Hao-Wei, 260 Yilan County (TW); LEE, Chun-Yi, 106 Taipei City (TW)
(74) Representative: Pfenning, Meinig & Partner mbB

(57) **Abstract**

An image processing method (300) may include processing an original image (100) to generate a plurality of activated patches, performing a first scanning operation (S1) on the plurality of activated patches according to a first scanning pattern to collect first scan data (D1), performing a second scanning operation (S2) on the plurality of activated patches according to a second scanning pattern to collect second scan data (D2), and processing at least the first scan data (D1) and the second scan data (D2) to generate an improved image. The first scanning pattern is different from the second scanning pattern.

## Description

### Field of the Invention

The disclosure is related to an image processing method and an image processing system, and more particularly, an image processing method and an image processing system where at least two scanning operations are performed to generate an improved image.

### Background of the Invention

With the advancement of image processing technology, there has been an increasing demand for processing and reconstructing lower-quality images to generate higher-quality outputs. For example, many users seek to convert vintage photographs into high-resolution images to achieve enhanced visual experiences. Additionally, photographs captured by electronic devices also require improvement to achieve greater clarity and definition.

Currently, several algorithms provide related functionalities for image enhancement. However, these existing technologies commonly encounter a fundamental limitation wherein spatially adjacent regions within an image cannot adequately preserve their correlational relationships during computational processing procedures. Consequently, although the reconstructed images demonstrate marginal improvements compared to the original inputs, the overall quality remains suboptimal and fails to satisfy user expectations for enhanced image fidelity and resolution.

### Summary of the Invention

The present invention is set out in the appended set of claims.

### Brief Description of the Drawings

In the following, the invention is further illustrated by way of example, taking reference to the accompanying drawings. Thereof:
FIG.1 illustrates a diagram of an image being processed according to an embodiment;
FIG.2 illustrates a diagram of the image being processed according to another embodiment;
FIG.3 illustrates a flow chart of an image processing method according to an embodiment;
FIG.4 illustrates a diagram of an image being processed according to another embodiment;
FIG.5 illustrates a diagram of the image being processed according to another embodiment;
FIG.6 provides additional available scanning patterns according to embodiments;
FIG.7 illustrates an image processing system according to an embodiment;
FIG.8 illustrates an image processing system according to another embodiment;
FIG.9 illustrates the scanning processing unit according to an embodiment; and
FIG.10 illustrates an image processing method according to another embodiment.

### Detailed Description

As used herein, when A is described as "including" B or "comprising" B, it means that A includes but is not limited to B. As used herein, when "and/or" is used to connect two elements, it indicates the inclusion of at least one of the two elements or any reasonable combination thereof. For example, "A and/or B" encompasses the scenarios of A only, B only, and both A and B. As used herein, when performing an operation using X is mentioned, it indicates that X may be used but is not limited to using only X to perform the operation. In this disclosure, the term 'may' indicates that the described feature or step is optional and does not limit other possible implementations.

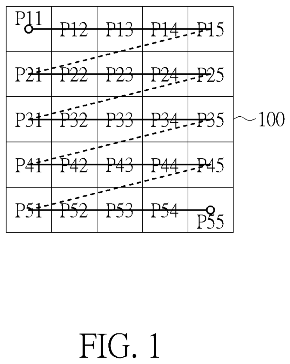

FIG.1 illustrates a diagram of an image 100 being processed according to an embodiment. As shown in FIG.1, the image 100 may be partitioned into m×n patches arranged in m rows and n columns. In the illustrated example, m=n=5, but this is merely exemplary for ease of explanation, and the embodiments are not limited thereto.

In this disclosure, each patch may include k×k pixels, where k is an integer greater than zero. For example, one patch may be a single pixel. Alternatively, one patch may be a rectangular area formed by 2×2 pixels (i.e., 4 pixels) or 3×3 pixels (i.e., 9 pixels). The area of the patch and the number of pixels included may be adjusted according to requirements. In this disclosure, a patch located at the i-th row and j-th column may be represented by position coordinates (i,j), and the patch itself may be denoted as Pij. As shown in FIG.1, scanning may be performed to collect data from all patches of the image 100. In FIG.1, a row-by-row scanning approach is illustrated, where the first row is scanned from left to right, followed by the second row from left to right, and so forth until the fifth row is scanned from left to right. This process ensures that all m×n patches (25 patches in this example) are scanned and their relevant data is collected. The collected data may subsequently be used in computational processes to improve the resolution and quality of each patch. Consider the patch P33 at position (3,3) and the patch P22 at position (2,2). It may be observed that the patches P33 and P22 are spatially adjacent to each other in the image. However, according to the scanning pattern of FIG.1, the scanning sequence places the patches P23, P24, P25, P31, and P32 between the patches P22 and P33. This creates a situation where the patches that are spatially close (P33 and P22) are separated by a significant distance in the scanning sequence. Consequently, when the patch P33 is the target patch to be improved, the spatial correlations with nearby patches may be difficult to process correctly, potentially resulting in suboptimal consideration of the spatially relevant patch P22 during the optimization process.

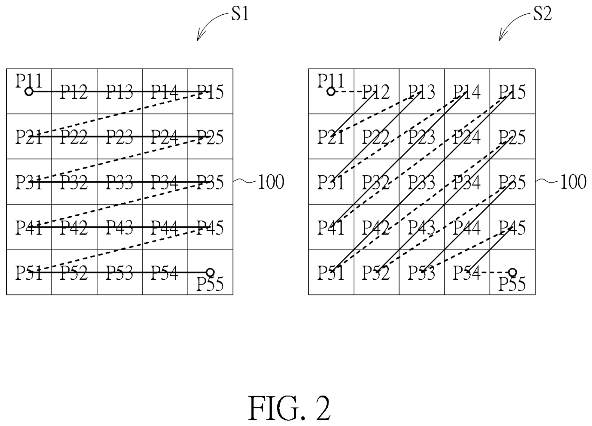

FIG.2 illustrates a diagram of the image 100 being processed according to another embodiment. In FIG.2, two scanning operations may be performed on the image 100, where the scanning operation S1 may be as shown in FIG.1 and thus will not be reiterated, while the scanning operation S2 may use a scanning pattern different from that of FIG.1. In the scanning operation S2, the scanning sequence may proceed as follows: the patch P11, the patch P12, the patch P21, the patch P13, the patch P22, the patch P31... until the patch P55. The scanning operation S2 may include multiple diagonal scanning paths, for example, a path from the patch P12 to the patch P21, a path from the patch P13 to the patch P22 to the patch P31, and so forth.

In the scanning operation S1, although the patch P12 and the patch P21 are spatially close to each other, they are separated by multiple patches during the scanning process. In the scanning operation S2, the patch P12 and the patch P21 are both spatially close and close in the scanning sequence. Therefore, by using both the scanning operations S1 and S2 instead of using only the scanning operation S1, the problem of inadequate reflection of correlations between patches may be effectively improved. In other words, the problem of spatial discontinuity of patches may be reduced.

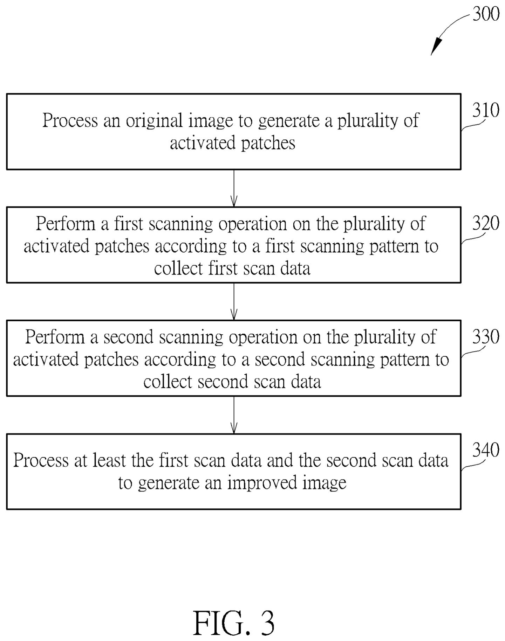

FIG.3 illustrates a flow chart of an image processing method 300 according to an embodiment. The image processing method 300 includes the following steps:
Step 310: process an original image to generate a plurality of activated patches;
Step 320: perform a first scanning operation on the plurality of activated patches according to a first scanning pattern to collect first scan data;
Step 330: perform a second scanning operation on the plurality of activated patches according to a second scanning pattern to collect second scan data; and
Step 340: process at least the first scan data and the second scan data to generate an improved image.

In the image processing method 300, the first scanning pattern is different from the second scanning pattern.

Using FIG.2 as an example, Step 310 may involve processing the image 100 to generate the patches P11 to P55 (a total of 25 patches). Step 320 may correspond to the scanning operation S1, where the first scan data may be represented as D1=Data{P11, P12, P13, P14, P15, P21, P22..., P54, P55} based on the first scanning pattern. Step 330 may correspond to the scanning operation S2, where the second scan data may be represented as D2=Data{P11, P12, P21, P13, P22, P31, P14..., P45, P54, P55} based on the second scanning pattern. Step 340 may involve using at least the first scan data D1 and the second scan data D2 to generate an improved image with enhanced image quality and resolution.

In FIG.3, by utilizing the first scanning operation and the second scanning operation, an all-around scanning approach can be achieved to improve the image quality of the resulting image.

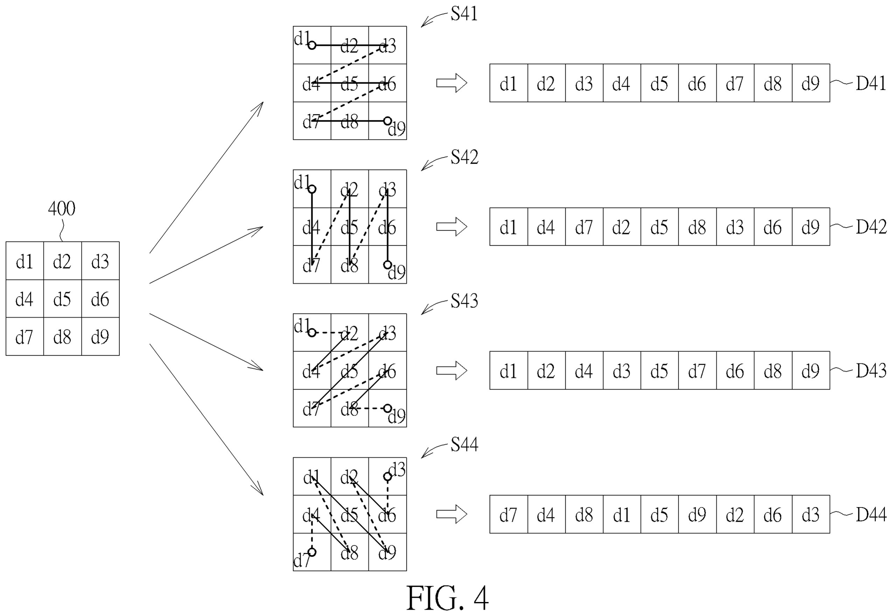

In steps 320 and 330, at least one of the first scanning pattern and the second scanning pattern may include a non-orthogonal scanning direction. FIG.4 provides an illustrative example.

The above provides a simplified example, but embodiments are not limited thereto. FIG.4 illustrates a diagram of an image 400 being processed according to another embodiment. For ease of explanation, the image 400 may be processed to generate 3×3 patches. The data of the multiple patches of the image 400 may be respectively denoted as d1, d2, d3, d4, d5, d6, d7, d8, d9, where d1, d2, d3 are in the first row, d4, d5, d6 are in the second row, and d7, d8, d9 are in the third row.

Steps 320 and 330 in FIG.3 describe performing two scanning operations to collect scan data, but embodiments are not limited thereto. In FIG.4, four scanning operations S41, S42, S43, and S44 may be performed.

In the scanning operation S41, the first row to the third row may be scanned sequentially, where the scan data D41 = {d1, d2, d3, d4, d5, d6, d7, d8, d9} may be collected.

In the scanning operation S42, the first column to the third column may be scanned sequentially, where the scan data D42 = {d1, d4, d7, d2, d5, d8, d3, d6, d9} may be collected.

In the scanning operation S43, diagonal path scanning may be used, where the scan data D43 = {d1, d2, d4, d3, d5, d7, d6, d8, d9} may be collected.

In the scanning operation S44, another diagonal path scanning may be used, where the scan data D44 = {d7, d4, d8, d1, d5, d9, d2, d6, d3} may be collected.

In the scan data D41 to D44, the sequential arrangement of the patch data maintains spatial significance and may enable preservation of inter-patch correlations during subsequent processing operations.

In FIG.4, the scan data D41, D42, D43, and D44 may be utilized and processed to generate an improved image. Therefore, multiple scanning operations may be performed to address spatial correlation issues between patches.

As shown in FIG.4, the scanning operation S41 performs horizontal scanning, and the scanning operation S42 performs vertical scanning; therefore, the scanning operations S41 and S42 represent orthogonal scanning directions. Here, orthogonal scanning describes the row-by-row scanning of the scanning operation S41 and the column-by-column scanning of the scanning operation S42. However, while the directions required for transitions between rows (such as from d3 to d4 in the scanning operation S41) and the directions required for column transitions (such as from d7 to d2 in the scanning operation S42) are necessary for the scanning process, the scanning operations S41 and S42 are still referred to as orthogonal scanning operations.

The scanning operations S43 and S44 perform non-orthogonal scanning directions. The scanning operations S43 and S44 can improve spatial correlation issues that occur during orthogonal scanning operations.

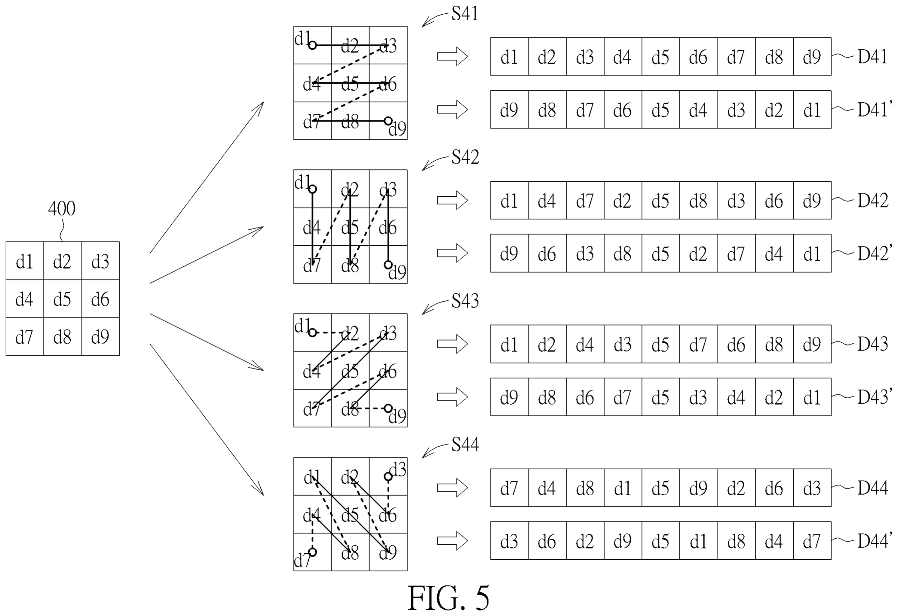

FIG.5 illustrates a diagram of the image 400 being processed according to another embodiment. Similar to FIG.4, in FIG.5, the image 400 may be scanned to generate the scan data D41, D42, D43, and D44. The similarities will not be reiterated. However, in FIG.5, a flip operation may be performed on the scan data D41 to obtain flipped data D41'. A flip operation may be performed on the scan data D42 to obtain flipped data D42'. A flip operation may be performed on the scan data D43 to obtain flipped data D43'. A flip operation may be performed on the scan data D44 to obtain flipped data D44'.

As shown in FIG.5, D41' = {d9, d8, d7, d6, d5, d4, d3, d2, d1}, D42' = {d9, d6, d3, d8, d5, d2, d7, d4, d1}, D43' = {d9, d8, d6, d7, d5, d3, d4, d2, d1}, and D44' = {d3, d6, d2, d9, d5, d1, d8, d4, d7}. In FIG.5, the scan data D41, D42, D43, D44 and the flipped data D41', D42', D43', D44' may be used and processed to generate an improved image. By generating and utilizing the flipped data D41', D42', D43', and D44', the image quality of the resulting image may be further enhanced.

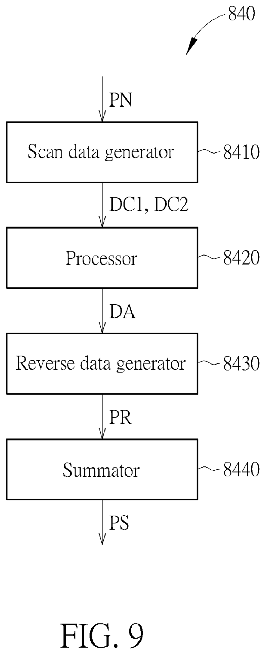

The scan data D41 to D44 and D41' to D44' may be one-dimensional data, which after being processed (e.g., with the processor 8420 described in FIG.9) may remain as one-dimensional data, and after being processed by a reverse scanning operation (e.g., with the reverse data generator 8430 described in FIG.9) may become two-dimensional data. Further related details will be described in subsequent sections.

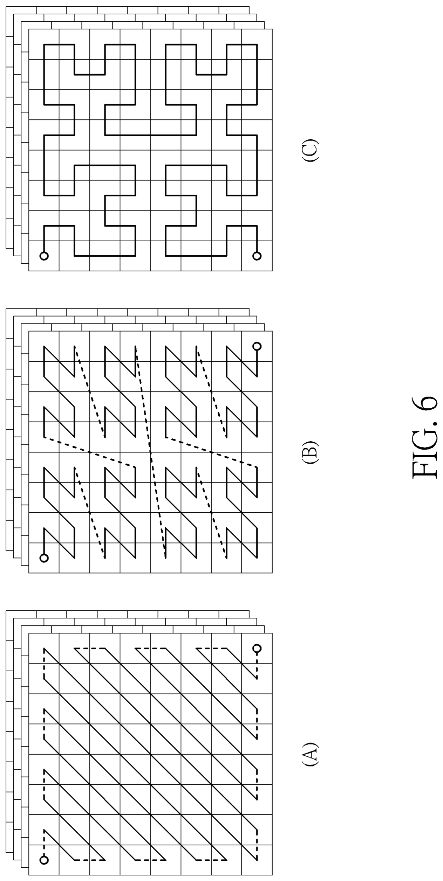

In the above description, the scanning operations S41 and S42 may represent orthogonal scanning directions (horizontal or vertical), while S43 and S44 may represent non-orthogonal directions (diagonal). FIG.6 provides additional available scanning patterns according to embodiments. FIG.6(A) shows a zigzag scanning pattern, where the scanning follows a zigzag trajectory by changing scanning directions at predetermined intervals to form the zigzag pattern. FIG.6(B) shows a z-order scanning pattern, where the scanning follows a z-shaped trajectory to scan multiple patches within defined regions, and the z-shaped pattern may be repeated across different regions of the image. FIG.6(C) shows a space-filling curve scanning pattern, which traverses patches in a fractal-based sequence.

The first scanning pattern and the second scanning pattern mentioned in FIG.3 may include two different patterns selected from a group including a diagonal scanning pattern, a horizontal scanning pattern, a vertical scanning pattern, a zigzag scanning pattern, and a space-filling curve scanning pattern. However, at least one of the scanning patterns may be a non-orthogonal pattern other than a horizontal scanning pattern or a vertical scanning pattern.

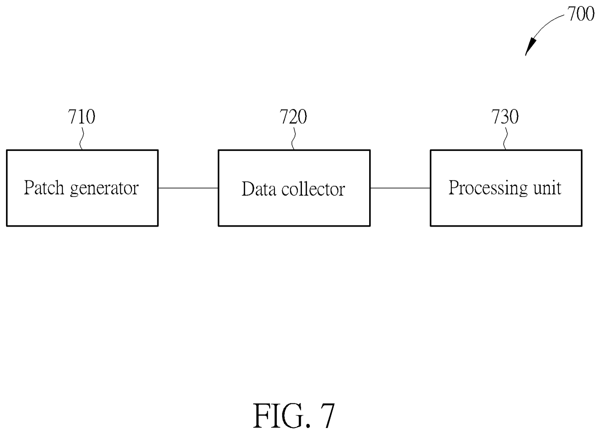

FIG.7 illustrates an image processing system 700 according to an embodiment. The image processing system 700 includes a patch generator 710, a data collector 720, and a processing unit 730. The image processing system 700 is used to execute the image processing method 300 of FIG.3. The patch generator 710 is used to execute Step 310, the data collector 720 is used to execute Steps 320 and 330, and the processing unit 730 is used to execute Step 340. The patch generator 710, the data collector 720, and the processing unit 730 are implemented with software, hardware, firmware, and/or a non-transitory computer-readable medium. The patch generator 710, the data collector 720, and the processing unit 730 may be implemented with neural networks (e.g., CNN, RNN, etc.). In the image processing system 700, a non-transitory computer-readable medium may be used for storing instructions that, when executed in hardware to implement neural networks, process the original image and generate the improved image. In this disclosure, hardware may include but is not limited to integrated circuits, processing units (such as CPU, GPU, NPU, TPU, etc.), memory, and other hardware devices.

Similar to FIG.5, the processing unit 730 may further perform a first flip operation on the first scan data to obtain first flipped data, and perform a second flip operation on the second scan data to obtain second flipped data. The processing unit 730 may process the first scan data, the second scan data, the first flipped data, and the second flipped data to generate the improved image. The patch generator 710, the data collector 720, and the processing unit 730 are shown as separate elements in FIG.7, but any two or all three of them may be integrated together according to actual requirements.

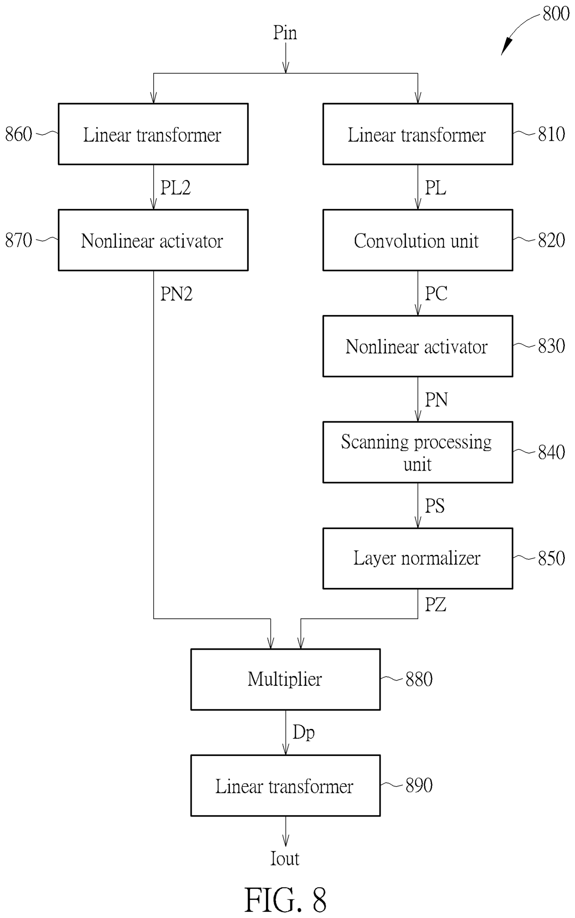

FIG.8 illustrates an image processing system 800 according to another embodiment. The image processing system 800 may include a linear transformer 810, a convolution unit 820, a nonlinear activator 830, a scanning processing unit 840, a layer normalizer 850, a linear transformer 860, a nonlinear activator 870, a multiplier 880, and a linear transformer 890. An original image may be partitioned into a plurality of patches Pin. The patches Pin may be input to the image processing system 800 to generate an improved image Iout.

FIG.9 illustrates the scanning processing unit 840 according to an embodiment. The scanning processing unit 840 may include a scan data generator 8410, a processor 8420, a reverse data generator 8430, and a summator 8440. The scanning processing unit 840 may correspond to FIG.7 and provides more detailed information. The linear transformer 810 to the nonlinear activator 830 may correspond to the patch generator 710. The scan data generator 8410 in the scanning processing unit 840 may correspond to the data collector 720. The processor 8420 to the summator 8440 in the scanning processing unit 840 and the layer normalizer 850 to the linear transformer 890 may correspond to the processing unit 730. Further details will be described in the following sections.

Each of the linear transformers 810, 850, and 860 may be an affine linear transformer. The convolution unit 820 may be a depth-wise 2D convolution unit, which may be a specialized convolution operation that applies separate convolution filters to each input channel independently, rather than combining information across channels like standard convolution. In the convolution unit 820, each channel may be processed with its own dedicated kernel, reducing computational complexity and parameter count while maintaining spatial feature extraction capabilities. This can make the convolution unit 820 particularly efficient for mobile and edge computing applications where computational resources are limited. Each of the nonlinear activators 830 and 870 may be a sigmoid activator, an ReLU (Rectified Linear Unit) activator, a Tanh (Hyperbolic Tangent) activator, or other suitable nonlinear activator. The multiplier 880 may be an element-wise multiplier.

The elements in FIG.8 and FIG.9 (e.g., 810 to 890, 8410 to 8440) may be implemented with software, hardware, firmware, and/or a non-transitory computer-readable medium. The elements in FIG.8 and FIG.9 may be implemented with neural networks (e.g., CNN, RNN, etc.). In FIG.8 and FIG.9, a non-transitory computer-readable medium may be used for storing instructions that, when executed in hardware to implement neural networks, process the original image and generate the improved image.

In FIG.8 and FIG.9, an original image may be partitioned to generate a plurality of patches Pin. The patches Pin may be processed by the linear transformer 810 to generate a plurality of first linear patches PL. The first linear patches PL may be processed by the convolution unit 820 to generate a plurality of convoluted patches PC. The convoluted patches PC may be processed by the nonlinear activator 830 to generate a plurality of first activated patches PN. The first activated patches PN may be input to the scanning processing unit 840 to generate a plurality of summed patches PS. The summed patches PS may be processed by the layer normalizer 850 to generate a plurality of normalized patches PZ. The patches Pin may be processed by the linear transformer 860 to generate a plurality of second linear patches PL2. The second linear patches PL2 may be processed by the nonlinear activator 870 to generate a plurality of second activated patches PN2. The second activated patches PN2 and the normalized patches PZ may be input to the multiplier 880 to obtain product data Dp. The product data Dp may be processed by the linear transformer 890 to obtain the improved image Iout.

In the scanning processing unit 840, the first activated patches PN may be processed by the scan data generator 8410 to obtain first scan data DC1 and second scan data DC2. The first scan data DC1 and the second scan data DC2 may be processed by the processor 8420 to obtain processed data DA. The processed data DA may be processed by the reverse data generator 8430 to obtain a plurality of reversed patches PR. The reversed patches PR may be processed by the summator 8440 to obtain the summed patches PS.

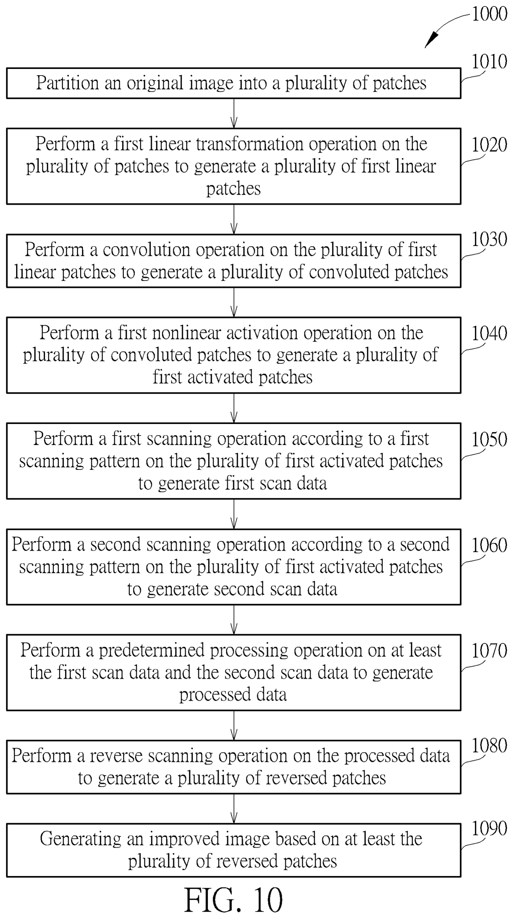

FIG.10 illustrates an image processing method 1000 according to another embodiment. With reference to FIG.8 and FIG.9, the image processing method 1000 may include the following steps.

Step 1010: Partition an original image into a plurality of patches Pin;
Step 1020: Perform a first linear transformation operation on the plurality of patches Pin to generate a plurality of first linear patches PL;
Step 1030: Perform a convolution operation on the plurality of first linear patches PL to generate a plurality of convoluted patches PC;
Step 1040: Perform a first nonlinear activation operation on the plurality of convoluted patches PC to generate a plurality of first activated patches PN;
Step 1050: Perform a first scanning operation according to a first scanning pattern on the plurality of first activated patches PN to generate first scan data DC1;
Step 1060: Perform a second scanning operation according to a second scanning pattern on the plurality of first activated patches PN to generate second scan data DC2;
Step 1070: Perform a predetermined processing operation on at least the first scan data DC1 and the second scan data DC2 to generate processed data DA;
Step 1080: Perform a reverse scanning operation on the processed data DA to generate a plurality of reversed patches PR; and
Step 1090: Generating an improved image based on at least the plurality of reversed patches PR.

In the image processing method 1000, the first scanning pattern is different from the second scanning pattern.

Steps 1010 to 1040 may correspond to Step 310 of FIG.3. Step 1050 may correspond to Step 320. Step 1060 may correspond to Step 330. Steps 1080 to 1090 may correspond to Step 340. Step 1020 may correspond to the linear transformer 810 in FIG.8. Step 1030 may correspond to the convolution unit 820. Step 1040 may correspond to the nonlinear activator 830. Steps 1050 and 1060 may correspond to the scan data generator 8410. Step 1070 may correspond to the processor 8420. Step 1080 may correspond to the reverse data generator 8430. Step 1090 may correspond to the layer normalizer 850, the linear transformer 860, the nonlinear activator 870, the multiplier 880, and the linear transformer 890.

In Step 1040, the nonlinear activation operation may include a sigmoid activation operation, a ReLU (Rectified Linear Unit) activation operation, a Tanh (Hyperbolic Tangent) activation operation, or other suitable nonlinear operation.

In Step 1070, the predetermined processing operation performed using the processor 8420 may include a state space sequence operation. According to some embodiments, the predetermined processing operation performed using the processor 8420 may further include a structured operation and a selective scan operation. If the predetermined processing operation includes the state space sequence operation, the structured operation, and the selective scan operation, the predetermined processing operation may be referred to as an S6 operation.

Similar to FIG.5, in the image processing method 1000, a first flip operation may be selectively performed on the first scan data DC1 to obtain first flipped data (denoted as DC1'), and a second flip operation may be performed on the second scan data DC2 to obtain second flipped data (denoted as DC2'). The scan data DC1 and DC2, and the flipped data DC1' and DC2' may be used to generate processed data DA for generating the improved image Iout.

In FIG.8, FIG.9, and FIG.10, the plurality of first activated patches PN and the plurality of reversed patches PR may be two-dimensional data. The first scan data DC1, the second scan data DC2, and the processed data DA may be one-dimensional data.

In Step 1030, the convolution operation may include a depth-wise two-dimensional convolution operation.

In addition to Steps 1010 to 1080 in FIG.10, the image processing method 1000 may further include the following operations. As shown in FIG.8, the linear transformer 860 may be used for performing a second linear transformation operation on the patches Pin to generate the second linear patches PL2, and the nonlinear activator 870 may be used for performing a second nonlinear activation operation on the second linear patches PL2 to generate the second activated patches PN2. Furthermore, as shown in FIG.8 and FIG.9, Step 1090 may include the following operations. The summator 8440 may be used for performing a summation operation on the reversed patches PR to generate the summed patches PS. The layer normalizer 850 may be used for performing a layer normalization operation on the summed patches PS to generate the normalized patches PZ. The multiplier 880 may be used for performing a multiplication operation on the normalized patches PZ and the second activated patches PN2 to generate product data Dp. The linear transformer 890 may be used for generating the improved image Iout based on the product data Dp.

The multiplication operation performed by the multiplier 880 may be an element-wise multiplication operation. The nonlinear activation operation described in this disclosure may be a sigmoid activation operation, a ReLU (Rectified Linear Unit) activation operation, a Tanh (Hyperbolic Tangent) activation operation, or other suitable nonlinear activation operations.

The plurality of scan data and/or their corresponding flipped data generated by the multiple scanning operations may be combined using uniform or non-uniform weighting parameters to enhance the optimization of the improved image. Here, the weighting coefficients applied to the scan data and/or flipped data may be learned parameters obtained through neural network training and machine learning techniques. Different scanning patterns may contribute varying degrees of effectiveness to different image features, thereby enabling the weighting parameters to be adaptively adjusted based on image content characteristics. This adaptive weighting mechanism allows the system to dynamically optimize the contribution of each scanning pattern according to the specific features and requirements of the input image, resulting in enhanced image restoration performance. For example, the weighting coefficient of the scan data DC1 may be greater than or less than that of the flipped data DC1'. In another example, the weighting coefficients of the scan data DC 1 and the flipped data DC1' may be greater than or less than those of the scan data DC2 and the flipped data DC2', thereby resulting in different output results.

In this disclosure, a linear operation may include but is not limited to an affine linear operation, a matrix multiplication operation, a linear projection operation, or other suitable linear transformation operations. Each of the linear transformers 810, 860, and 890 may perform a linear operation mentioned above. In this disclosure, the original image and the improved image Iout may be in a format selected from the group including an RGB format, an RGBA format, a BGR format, a grayscale format, a YUV format, an HSV format, and an LAB format.

In summary, the image processing methods 300 and 1000 and the image processing systems 700 and 800 may provide effective solutions that achieve all-around scanning through multiple scanning operations. This approach addresses the fundamental issue where spatially adjacent patches become separated by significant distances in the scanned sequence when relying solely on horizontal and vertical scanning. By implementing this multi-directional scanning strategy, the undesired local pixel forgetting problem can be substantially reduced, thereby enabling superior generation of improved images and videos. This methodology proves particularly beneficial for capturing both global and local contextual information within images. Experimental validation demonstrates that Peak Signal-to-Noise Ratio (PSNR) values can be effectively enhanced and denoising performance significantly improved. Specifically, the average PSNR on the Urban100 dataset with Gaussian image denoising exhibits consistent improvements across various noise levels. These enhancements make the disclosed techniques particularly valuable for image restoration and related vision applications.

## Claims

1. An image processing method (300, 1000), **characterised by** comprising:
processing an original image (100, 400) to generate a plurality of activated patches;
performing a first scanning operation (S1, S41) on the plurality of activated patches according to a first scanning pattern to collect first scan data (D1, D41, DC1);
performing a second scanning operation (S2, S42) on the plurality of activated patches according to a second scanning pattern to collect second scan data (D2, D42, DC2); and
processing at least the first scan data (D1, D41, DC1) and the second scan data (D2, D42, DC2) to generate an improved image (Iout);
wherein the first scanning pattern is different from the second scanning pattern.

2. The method (300, 1000) according to claim 1, **characterised in that** the first scanning pattern and the second scanning pattern are selected to reduce spatial discontinuity of the plurality of activated patches.

3. The method (300, 1000) according to any one of claims 1 or 2, **characterised in that** the first scanning pattern and the second scanning pattern are two different patterns selected from a group comprising:
a diagonal scanning pattern, a horizontal scanning pattern, a vertical scanning pattern, a zigzag scanning pattern, and a space-filling curve scanning pattern.

4. The method (300, 1000) according to any one of claims 1 to 3, **characterised in that** at least one of the first scanning pattern and the second scanning pattern comprises a non-orthogonal scanning direction.

5. The method (300, 1000) according to any one of claims 1 to 4, **characterised by** further comprising:
performing a first flip operation on the first scan data (D1, D41, DC1) to obtain first flipped data (D41', DC1'); and
performing a second flip operation on the second scan data (D2, D42, DC2) to obtain second flipped data (D42', DC2');
wherein processing at least the first scan data (D1, D41, DC1) and the second scan data (D2, D42, DC2) to generate the improved image (Iout) is processing the first scan data (D1, D41, DC1), the second scan data (D2, D42, DC2), the first flipped data (D41', DC1') and the second flipped data (D42', DC2') to generate the improved image (Iout).

6. The method (300, 1000) according to any one of claims 1 to 5, **characterised in that** each of the plurality of activated patches comprises k×k pixels, where k is an integer greater than zero.

7. The method (1000) according to any one of claims 1 to 6, **characterised in that:**
processing the original image (100, 400) to generate the plurality of activated patches comprises:
partitioning the original image (100, 400) into a plurality of patches (Pin);
performing a first linear transformation operation on the plurality of patches (Pin) to generate a plurality of first linear patches (PL);
performing a convolution operation on the plurality of first linear patches (PL) to generate a plurality of convoluted patches (PC); and
performing a first nonlinear activation operation on the plurality of convoluted patches (PC) to generate a plurality of first activated patches (PN), wherein the plurality of activated patches comprises the plurality of first activated patches (PN);
performing the first scanning operation (S1, S41) on the plurality of activated patches according to the first scanning pattern to collect the first scan data (DC1) comprises:
performing the first scanning operation (S1, S41) according to the first scanning pattern on the plurality of first activated patches (PN) to generate the first scan data (DC1);
performing the second scanning operation (S2, S42) on the plurality of activated patches according to the second scanning pattern to collect the second scan data (DC2) comprises:
performing the second scanning operation (S2, S42) according to the second scanning pattern on the plurality of first activated patches (PN) to generate the second scan data (DC2); and
processing at least the first scan data (DC1) and the second scan data (DC2) to generate the improved image (Iout) comprises:
performing a predetermined processing operation on at least the first scan data (DC1) and the second scan data (DC2) to generate processed data (DA);
performing a reverse scanning operation on the processed data (DA) to generate a plurality of reversed patches (PR); and
generating the improved image (Iout) based on the plurality of reversed patches (PR).

8. The method (1000) according to claim 7, **characterised in that** the predetermined processing operation comprises a state space sequence operation.

9. The method (1000) according to claim 8, **characterised in that** the predetermined processing operation further comprises a structured operation and a selective scan operation.

10. The method (1000) according to any one of claims 7 to 9, **characterised by** further comprising:
performing a first flip operation on the first scan data (DC1) to obtain first flipped data (DC1'); and
performing a second flip operation on the second scan data (DC2) to obtain second flipped data (DC2');
wherein performing the predetermined processing operation on at least the first scan data (DC1) and the second scan data (DC2) to generate the processed data (DA) is performing the predetermined processing operation on the first scan data (DC1), the second scan data (DC2), the first flipped data (DC1'), and the second flipped data (DC2') to generate the processed data (DA).

11. The method (1000) according to any one of claims 7 to 10, **characterised in that:**
the plurality of first activated patches (PN) and the plurality of reversed patches (PR) are two-dimensional data; and
the first scan data (DC1), the second scan data (DC2) and the processed data (DA) are one-dimensional data.

12. The method (1000) according to any one of claims 7 to 11, **characterised by** further comprising:
performing a second linear transformation operation on the plurality of patches (Pin) to generate a plurality of second linear patches (PL2); and
performing a second nonlinear activation operation on the plurality of second linear patches (PL2) to generate a plurality of second activated patches (PN2), wherein the plurality of activated patches further comprises the plurality of second activated patches (PN2);
wherein generating the improved image (Iout) based on the plurality of reversed patches (PR) comprises:
performing a summation operation on the plurality of reversed patches (PR) to generate a plurality of summed patches (PS);
performing a layer normalization operation on the plurality of summed patches (PS) to generate a plurality of normalized patches (PZ);
performing a multiplication operation on the plurality of normalized patches (PZ) and the plurality of second activated patches (PN2) to generate product data (Dp); and
generating the improved image (Iout) based on the product data (Dp).

13. The method (1000) according to claim 12, **characterised in that** generating the improved image (Iout) based on the product data (Dp) comprises:
performing a third linear transformation operation on the product data (Dp) to generate the improved image (Iout).

14. An image processing system (700, 800), **characterised by** comprising:
a patch generator (710) configured to process an original image (100, 400) to generate a plurality of activated patches;
a data collector (720) configured to perform a first scanning operation (S1, S41) on the plurality of activated patches according to a first scanning pattern to collect first scan data (D1, D41, DC1), and perform a second scanning operation (S2, S42) on the plurality of activated patches according to a second scanning pattern to collect second scan data (D2, D42, DC2); and
a processing unit (730) configured to process at least the first scan data (DC1) and the second scan data (DC2) to generate an improved image (Iout);
wherein the first scanning pattern is different from the second scanning pattern.

15. The image processing system (700, 800) according to claim 14, **characterised in that:**
the processing unit (730) is further configured to perform a first flip operation on the first scan data (DC1) to obtain first flipped data (DC1'), and perform a second flip operation on the second scan data (DC2) to obtain second flipped data (DC2'); and
the processing unit (730) is configured to process the first scan data (DC1), the second scan data (DC2), the first flipped data (DC1'), and the second flipped data (DC2') to generate the improved image (Iout).
